(19) **Europäisches Patentamt / European Patent Office / Office européen des brevets**

(11) **EP 2 225 693 B1**

(12) **FASCICULE DE BREVET EUROPEEN**

(45) Date de publication et mention
de la délivrance du brevet:
**28.03.2012 Bulletin 2012/13**

(51) Int Cl.:
*G06F 21/00* (2006.01)     *G06F 21/02* (2006.01)
*G06F 21/24* (2006.01)

(21) Numéro de dépôt: **08867595.4**

(86) Numéro de dépôt international:
**PCT/EP2008/066568**

(22) Date de dépôt: **02.12.2008**

(87) Numéro de publication internationale:
**WO 2009/083371 (09.07.2009 Gazette 2009/28)**

(54) **PROCEDE DE SECURISATION D'UN BRANCHEMENT CONDITIONNEL, SUPPORT D'INFORMATIONS, PROGRAMME ET SYSTEME SECURISE POUR CE PROCEDE**

VERFAHREN ZUR SICHERUNG EINER BEDINGTEN VERBINDUNG, INFORMATIONSTRÄGER, SOFTWARE UND GESICHERTES SYSTEM FÜR DIESES VERFAHREN

METHOD FOR SECURING A CONDITIONAL CONNECTION, INFORMATION CARRIER, SOFTWARE AND SECURED SYSTEM FOR SAID METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.12.2007 FR 0709165**

(43) Date de publication de la demande:
**08.09.2010 Bulletin 2010/36**

(73) Titulaire: **Viaccess**
**92057 Paris La Défense (FR)**

(72) Inventeurs:
• **LEPORINI, David**
**F-94150 Rungis (FR)**
• **GADACHA, Haythem**
**F-75015 Paris (FR)**

(74) Mandataire: **Colombo, Michel**
**Brevinnov**
**324, rue Garibaldi**
**69007 Lyon (FR)**

(56) Documents cités:
• **HAGAI BAR-EL ET AL: "The Sorcerer's Apprentice Guide to Fault Attacks" INTERNET CITATION, [Online] XP002329915 Extrait de l'Internet: URL:http://web.archive.org/web/ 20041016071 838/eprint.iacr.org/2004/100> [extrait le 2005-05-27]**

EP 2 225 693 B1

**Description**

L'invention concerne un procédé de sécurisation d'un branchement conditionnel contre des attaques par injection de fautes ainsi qu'un support d'informations et un système sécurisé contre de telles attaques.

Par branchement conditionnel, on désigne une instruction qui autorise l'exécution d'un traitement spécifique sur une donnée D uniquement si une expression booléenne entre un ou plusieurs opérandes est vérifiée et, sinon, qui interdit l'exécution du traitement spécifique sur la donnée D. Dans les langages de programmation de haut niveau, cette instruction s'écrit souvent sous la forme suivante : « si [expression booléenne] alors [traitement spécifique de D] sinon [traitement par défaut] ». Dans des cas particuliers, il n'y a pas de traitement par défaut de sorte que la clause « sinon » peut être omise. Toutefois, on trouve de nombreux branchements conditionnels dans des instructions qui ne s'écrivent pas nécessairement sous la forme « si... alors... sinon... ». Par exemple, une instruction « switch » se décompose en plusieurs branchements conditionnels bien qu'aucune instruction du type « si... alors... sinon... » n'apparaisse dans son écriture en langage de haut niveau. Plus précisément, en langage de haut niveau, une instruction switch peut s'écrire comme suit :

```
switch(V)[
case Vc : traitement spécifique 1,
case V'c : traitement spécifique 2
default : break
]
```

On désigne par la locution « expression booléenne » une expression qui, lorsqu'elle est évaluée, retourne soit la valeur « vrai » soit la valeur « faux ». On dit d'une expression booléenne qu'elle est vérifiée si le résultat est égal à « vrai », et qu'elle n'est pas vérifiée si le résultat est égal à « faux ». Le résultat de l'évaluation de l'expression booléenne est donc une valeur booléenne, c'est-à-dire une valeur codable à l'aide d'un seul bit d'information.

On définit une donnée booléenne comme étant une donnée dont la valeur est soit égale à « vrai » soit égale à « faux ». La valeur d'une donnée booléenne est donc systématiquement codable à l'aide d'un seul bit d'information. A l'inverse, une donnée non-booléenne est une donnée qui peut prendre strictement plus de deux valeurs différentes. Une donnée non-booléenne n'est donc pas systématiquement codable à l'aide d'un seul bit d'information.

A un branchement conditionnel est donc associée une expression booléenne comprenant un ou plusieurs opérandes. Par exemple, l'expression booléenne peut être :

- une expression d'égalité qui retourne la valeur « vrai » si les opérandes sont égaux et la valeur « faux » dans le cas contraire,
- une expression d'inégalité qui retourne la valeur « vrai » si les opérandes sont de valeurs différentes et la valeur « faux » dans le cas contraire,
- une expression de supériorité qui retourne la valeur « vrai » si le premier opérande est supérieur au second et la valeur « faux » dans le cas contraire,
- une expression d'infériorité qui retourne la valeur « vrai » si le premier opérande est inférieur au second et la valeur « faux » dans le cas contraire.

Enfin, ici, on désigne également par l'expression « chiffré » ou « chiffrement » toute opération visant à rendre inintelligible une donnée par un tiers qui ne dispose pas des informations nécessaires pour reconstruire la donnée d'origine. Typiquement, les chiffrements complexes c'est-à-dire ceux qui utilisent une quantité importante de ressources informatiques, utilisent un algorithme de chiffrement paramétré par une clé de chiffrement. Dans le cas d'un algorithme symétrique, la clé de chiffrement est également utilisée pour le déchiffrement. Dans le cas d'un algorithme asymétrique, la clé de déchiffrement est distincte de la clé utilisée pour le chiffrement. L'algorithme de chiffrement est soit public soit secret. La clé de chiffrement est toujours secrète lorsqu'il s'agit d'un algorithme de chiffrement symétrique et au moins l'une des clés, dite privée, est secrète lorsqu'il s'agit d'un algorithme de chiffrement asymétrique. Pour un algorithme de chiffrement donné, plus la clé de chiffrement est longue plus la sécurité est élevée. Par exemple, les clés sont au moins codées sur 32 bits et de préférence sur plus de 128 bits pour l'algorithme symétrique AES (Advanced Encryption Standard) ou plus de 1024 bits pour l'algorithme asymétrique RSA (Rivest, Shamir, & Adleman). Il existe aussi des chiffrements simples, c'est-à-dire nécessitant moins de ressources informatiques pour être exécutés. Un exemple de chiffrement simple est le masquage d'une donnée. Le masquage consiste par exemple à combiner la donnée à masquer avec un nombre aléatoire conservé secret.

Une attaque par injection de fautes, également connue sous le terme anglais de « fault attack », consiste à obliger un processeur à ne pas ou à mal exécuter des instructions. Par exemple, pour cela, les conditions environnementales du processeur sont volontairement perturbées. Par exemple, on soumet le processeur à de brusques augmentations de température ou on modifie le signal d'alimentation électrique ou le signal d'horloge. Il est aussi possible d'exposer le processeur à des impulsions laser, des émissions électromagnétiques ou des rayonnements de particules radioactives.

Les fautes que l'on provoque ainsi lors de l'exécution d'un programme entraînent des modifications, notamment aléatoires, des bits de données ou des sauts d'instruction. Par exemple, ces fautes peuvent provoquer une modification de l'adresse passée comme argument à une instruction de saut ou une modification de l'instruction de saut en elle-même.

Les branchements conditionnels sont tout particulièrement vulnérables à ce type d'attaque. En effet, une attaque par injection de fautes, peut permettre d'activer l'exécution du traitement spécifique indépendamment de l'évaluation de l'expression booléenne associée au « branchement conditionnel ». Ces branchements sont d'autant plus susceptibles d'être attaqués par ce type de méthode qu'ils sont situés ou réalisés à l'intérieur d'une routine de sécurité décisionnelle comme par exemple la vérification d'une signature numérique, la vérification d'un MAC (Message Authentification Code) ou un contrôle de cohérence via des fonctions de hachage.

Différentes solutions ont déjà été proposées pour sécuriser un branchement contre les attaques par injection de fautes. Ces solutions utilisent essentiellement la redondance des instructions pour rendre plus difficile la non-exécution d'un branchement conditionnel dans un programme. La demande de brevet WO 2007/006 887 décrit un exemple d'une telle solution.

De l'état de la technique est également divulgué dans le document suivant :

- Ian Logan, Frank O'Hara, « The complete Timex TS1000/Sinclair ZX81 ROM disassembly », publié par Leighton Buzzard Melbourne House, copyright 1982, ISBN 08616111136 qui montre après l'addresse 03D5 le code SBC HL, BC suivi de ADD ML, BC.

L'implémentation de ces solutions reste cependant difficile notamment parce qu'elle requiert souvent une organisation particulière de la mémoire du processeur.

L'invention vise à remédier à cet inconvénient en proposant un procédé de sécurisation d'un branchement conditionnel contre les attaques par injection de fautes plus facile à implémenter.

Elle a donc pour objet un procédé conforme à la revendication 1

Dans le procédé ci-dessus, le branchement conditionnel est remplacé par une suite d'opérations a) et b) que l'expression booléenne soit vérifiée ou non: Cela revient donc à remplacer les deux branches (la branche suivie si l'expression booléenne donne le résultat « vrai » et la branche suivie si l'expression booléenne donne le résultat «faux») d'un branchement conditionnel implémenté sous la forme d'un « si ... alors ... sinon ... » par une seule branche. Ainsi, on peut procéder systématiquement à l'exécution du traitement spécifique. Toutefois, dans le procédé ci-dessus cela ne remet pas en question la sécurité du programme. En effet, si l'expression booléenne, entre les opérandes est vérifiée, alors le traitement spécifique est exécuté sur la donnée valide D. Dans le cas contraire, si l'expression booléenne n'est pas vérifiée où si une attaque par injection de fautes a eu lieu, alors le traitement spécifique est, au pire, exécuté sur une autre valeur, et donne un résultat inexploitable ou inutile. Cette exécution du traitement spécifique sur une telle valeur invalide de la donnée D' ne donne pas plus d'informations que si ce traitement spécifique n'avait pas été exécuté. Eventuellement, cette valeur invalide de la donné D'peut même bloquer l'exécution du traitement spécifique si celle-à n'a pas un format correct.

Dans ces conditions, une attaque par injection de fautes sur cette partie du programme est nécessairement vouée à l'échec. En effet, une telle attaque est susceptible par modification du code des instructions à exécuter ou par modification de la valeur du pointeur ordinal indiquant l'instruction à exécuter, de modifier la valeur de la donnée D'. Si la valeur de la donnée D'est modifiée par l'injection de fautes, selon toute probabilité la valeur ainsi obtenue est invalide, Dans ces conditions, le fait que le traitement spécifique soit exécuté sur une valeur invalide de la données D' n'a pas d'importance et ne nuit pas à la sécurité du programme.

Enfin, les opérations a) et b) peuvent très facilement être implémentées dans un langage de programmation de haut niveau tel que le langage C, C++ ou Java. Ainsi l'implémentation du procédé ci-dessus est particulièrement simple et ne nécessite aucun adressage particulier de la mémoire.

La transformation de la donnée D en une donnée D* permet de protéger la donnée D ce qui augmente la sécurité du procédé.

Les modes de réalisation de ce procédé peuvent comporter une ou plusieurs des caractéristiques des revendications dependantes.

Ces modes de réalisation du procédé présentent en outre les avantages suivants :

- le chiffrement de la donnée D à l'aide d'un algorithme de chiffrement et d'une clé de chiffrement permet de transmettre le résultat de l'opération a) à un processeur par l'intermédiaire d'un réseau non sécurisé de transmission d'informations,

- générer une clé de chiffrement qui est fonction de la donnée D: lors de l'opération a) permet d'accroître la sécurité du procédé,
- utiliser une opération de masquage en tant qu'opération de chiffrement permet d'accélérer la vitesse d'exécution de ce procédé,
- le dénombrement des occurrences d'erreurs de syntaxe permet d'activer une contre-mesure en cas d'attaque répétée par injection de fautes ou en cas d'erreur récurrente dans l'expression booléenne sans que des erreurs dans le format interne de la donnée D, qui se sont produites lors de la génération de cette donnée, ne se traduisent aussi par le déclenchement de cette Contre-mesure.

L'invention a également pour objet un support d'enregistrement d'informations et un programme d'ordinateur conforme aux revendications 7 et 8.

L'invention a également pour objet un système sécurisé contre les attaques du branchement conditionnel par injection de fautes conforme à la revendication 9.

Les modes de réalisation de ce système peuvent comporter la caractéristique de la revendication 10.

Ces modes de réalisation du système présentent en outre l'avantage suivant

- utiliser un processeur de sécurité permet d'accroître la sécurité du système.

L'invention sera mieux comprise à la texture de la description qui va suivre, donnée uniquement à titre d'exemple non limitatif et faite en se référant aux dessins sur lesquels :

- la figure 1 est une illustration schématique de l'architecture d'un systéme sécurisé contre les attaques d'un branchement conditionnel par injection de fautes,
- la figure 2 est un organigramme d'un procédé de sécurisation d'un branchement conditionnel contre les attaques par injection de fautes mis en oeuvre dans le systéme de la figure 1.
- la figure 3 est une illustration schématique d'une autre architecture d'un système sécurisé contre les attaques d'un branchement conditionnel par injection de faute, et
- la figure 4 est un organigramme d'un autre procédé de sécurisation d'un branchement. conditionnel contre les attaques par injection de fautes mis en oeuvre dans le système de la figure 3.

Dans ces figures, les mêmes références sont utilisées pour désigner les mêmes éléments.

Dans la suite de cette description, les caractéristiques et les fonctions bien connues de l'homme du métier ne sont pas décrites en détail.

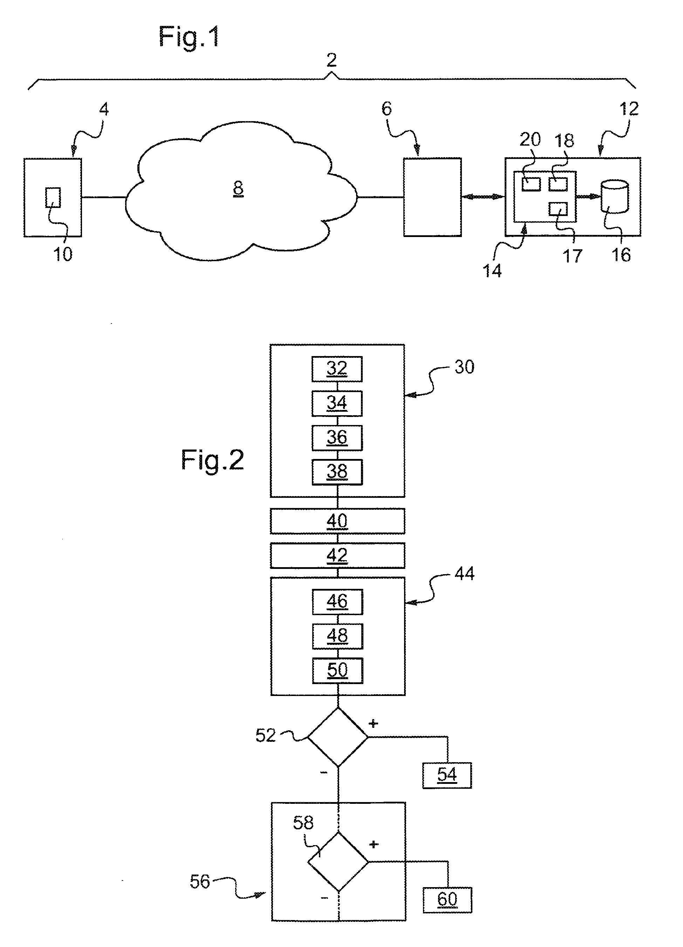

La figure 1 représente un système 2 sécurisé contre les attaques d'un branchement conditionnel par injection de fautes. Ici, ce système 2 comporte un serveur distant 4 raccordé à une unité de calcul 6 par l'intermédiaire d'un réseau 8 de transmission d'informations,

Le serveur 4 comporte un module 10 de chiffrement. Ce module 10 est en particulier apte à réaliser une signature avec appendice d'une donnée D. Le serveur 4 est apte à envoyer la donnée D accompagnée de sa signature à l'unité 6 par l'intermédiaire du réseau 8.

Le réseau 8 est un réseau non sécurisé de transmission d'informations tel que le réseau connu sous le terme de « Internet ».

L'unité 6 est par exemple une unité de calcul non sécurisée tel qu'un ordinateur ou un décodeur de programme multimédia. L'unité 6 est dite non sécurisée car il est possible de décompiler le programme qu'elle exécute sans difficulté.

L'unité 6 est raccordée à un processeur 12 de sécurité. Dans un tel processeur, l'accès aux instructions et au code à exécuter est rendu difficile. En particulier, la décompilation du programme à exécuter est volontairement rendue très difficile. Par exemple, le processeur de sécurité 12 est une carte à puce.

Le processeur 12 comprend un calculateur électronique 14 raccordé à une mémoire 16. Le calculateur 14 est apte à exécuter des instructions enregistrées dans la mémoire 16. A cet effet, la mémoire 16 comporte les instructions nécessaires à l'exécution du procédé de la figure 2.

Le calculateur 14 est notamment apte à exécuter les modules suivants :

- un module 17 de déchiffrement,
- un module 18 de combinaison des opérandes d'une expression booléenne, et
- un module 20 apte à exécuter un traitement spécifique sur une donnée.

Le module 10 et le calculateur 14 forment des moyens de calcul d'une donnée D' décrite plus en détail en regard du procédé de la figure 2.

Le fonctionnement du système 2 va maintenant être décrit plus en détail en regard du procédé de la figure 2.

Le procédé de la figure 2 est décrit dans le cas particulier de la transmission et de la vérification d'une signature numérique avec appendice. Cette signature numérique est représentée sous la forme du triplet suivant d'informations :

$(D, D^*, D_c)$

où :

- D est la donnée à signer codée sur plusieurs bits,
- $D^*$ est un cryptogramme de la donnée D,
- $D_c$ est une donnée de contrôle qui correspond, ici, à la signature de la donnée D.

Le procédé débute par une étape 30 de signature de la donnée D. A cet effet, lors d'une opération 32, le module 10 génère une clé $K_1$ à partir de la donnée D à signer. A cet effet, la relation suivante est par exemple utilisée :

$$K_1 = G(H(D))$$

où:

- G est une fonction quelconque de préférence secrète,
- H est une fonction de hachage plus connue sous le terme anglais de « hash function » qui construit une empreinte numérique de la donnée D.

Dans la suite de cet exemple, la fonction G est par exemple la fonction identité. La fonction H est par exemple la fonction de hachage RSA-SHA1.

Ensuite, lors d'une opération 34, la donnée D est formatée pour que sa syntaxe respecte des règles particulières. Par exemple, ce formatage est réalisé en effectuant une opération de remplissage plus connue sous le terme anglais de « padding ». Ici, cette opération de remplissage consiste à concaténer des octets dont les valeurs sont connues avant et après la donnée D en elle-même. Par exemple, après cette opération 34, la donnée formatée est la suivante :

$$0x29||0x09||D||0x19||0x80$$

où :

- la notation 0x.. désigne un chiffre en notation hexadécimale, et
- « $\|$ » est la fonction concaténation.

Une fois la donnée D formatée, celle-ci est chiffrée, lors d'une opération 36, pour obtenir le cryptogramme $D^*$. Ici, le cryptogramme $D^*$ est obtenu à l'aide de la relation suivante :

$$D^* = ES_{K_1}(D)$$

où:

- ES est un algorithme de chiffrement symétrique tel que AES ou 3DES, et
- $K_1$ est la clé générée lors de l'opération 32.

L'algorithme ES est une fonction inversible et réalise une transformation de la donnée D pour obtenir une donnée différente, c'est-à-dire le cryptogramme $D^*$.

Enfin, lors d'une opération 38, la signature Dc est construite. Ici, cette signature est construite à l'aide de la relation suivante :

$$D_C = EA_{Kpriv}(H(D))$$

où:

- D est la donnée formatée lors de l'opération 34,
- $K_{priv}$ est une clé de chiffrement privée d'une paire de clés asymétriques, et
- H est la même fonction de hachage que celle utilisée pour générer la clé $K_1$, et
- EA est un algorithme de chiffrement asymétrique.

A l'issue de l'étape 30, la signature avec appendice (D, D*, $D_C$) est transmise, lors d'une étape 40 à l'unité 6 par l'intermédiaire du réseau 8.

Lors d'une étape 42, l'unité 6 reçoit cette signature et la transmet au processeur 12 pour vérification, lors d'une étape 44, de la signature de la donnée D.

Si la vérification confirme l'authenticité de cette signature, un traitement spécifique est exécuté sur la donnée D. Dans le cas contraire, le traitement spécifique sur la donnée D doit être empêché. Il s'agit donc d'un branchement conditionnel particulièrement sensible. Ici, l'expression booléenne associée à ce branchement conditionnel est que l'empreinte numérique H(D) soit égale à une autre empreinte numérique H'(Dc). Les empreintes H(D) et H'(Dc) sont donc les opérandes de cette expression booléenne.

Cette étape 44 est exécutée par le processeur 12. Au début de l'étape 44, lors d'une opération 46, le processeur 12 calcule les empreintes numériques H(D) et H'(Dc). Ici, l'empreinte H'(Dc) est obtenue à l'aide de la relation suivante :

$$H'(D_C) = EA^{-1}{}_{Kpub}(D_C)$$

où:

- $EA^{-1}$ est l'algorithme de déchiffrement associé à l'algorithme de chiffrement asymétrique EA utilisé lors de l'opération 38,
- $K_{pub}$ est la clé de chiffrement publique correspondant à la clé de chiffrement privée $K_{priv}$.

Une fois que les empreintes H(D) et H'($D_C$) ont été calculées, lors d'une opération 48, le module 18 combine ces deux empreintes à l'aide d'une fonction F pour obtenir un résultat R tel que la valeur de R est égale à la clé $K_1$ si les empreintes H(D) et H'($D_C$) sont égales et différente de la clé $K_1$ si ces empreintes H(D) et H'($D_C$) ne sont pas égales. Le résultat R est une valeur non-booléenne codée sur autant de bits que la clé $K_1$ c'est-à-dire sur au moins 2 bits et de préférence sur plus de 32 bits. Par exemple, le résultat R est codé sur au moins 128 bits pour un algorithme AES et sur au moins 1024 bits pour un algorithme RSA.

Un exemple de fonction F ayant ces propriétés est le suivant :

$$R=F(D, D_C) = L(H(D)) \oplus L(H'(D_C)) \oplus G(H(D))$$

où:

- L est une fonction secrète telle qu'une fonction de hachage (par exemple, l'algorithme RSA-SHA1), et
- $\oplus$ est l'opération ou exclusif.

On comprend qu'une telle fonction F(D, $D_C$) retourne la valeur G(H(D)) lorsque H(D) est égal à H'($D_C$) et une valeur complètement différente lorsque les empreintes H(D) et H'($D_C$) sont différentes.

Ensuite, lors d'une opération 50, le module 16 déchiffre le cryptogramme D* en utilisant le résultat R obtenu à l'issue de l'opération 48 pour obtenir une nouvelle donnée D' non-booléenne. Cette opération de déchiffrement est aussi une opération de construction de la donnée D'. Par exemple, la donnée D' est obtenue à l'aide de la relation suivante :

$$D' = ES^{-1}{}_R(D^*)$$

où:

- $ES^{-1}$ est l'algorithme de déchiffrement associé à l'algorithme de chiffrement symétrique ES utilisé lors de l'opération 36.

Ainsi, si le résultat R est identique à la clé $K_1$, alors la donnée D'est identique à la donnée D. Par contre, si le résultat R est différent de la clé $K_1$, alors la donnée D' est différente de la donnée D. Les opérations 36, 48 et 50 forment donc une opération de calcul d'une donnée D' à partir de la donnée D et des opérandes H(D) et H'($D_c$) de manière à ce que la donnée D' soit identique à la donnée D si et seulement si l'expression booléenne est vérifiée. Dans le cas contraire, la donnée D' a une valeur autre, dite invalide.

De plus, étant donné que la donnée D'est obtenue par une opération de déchiffrement, la syntaxe de la donnée D' est différente de la syntaxe de la donnée D lorsque le résultat R est différent de la clé $K_1$.

Par conséquent, si la donnée D est correctement authentifiée à partir de sa signature, c'est-à-dire que les valeurs H(D) et H'($D_c$) sont égales, alors la donnée D' délivrée à l'issue de l'étape 44 est identique à la donnée D. Par contre, dans le cas contraire, c'est-à-dire que lors de l'étape 44 la donnée D n'a pas pu être authentifiée avec succès à partir de signature $D_C$, alors la donnée D'obtenue à l'issue de l'étape 44 est invalide et différente de la donnée D.

Ensuite, lors d'une étape 52, le processeur 12 vérifie la syntaxe de la donnée D'. Si cette syntaxe ne correspond pas au formatage appliqué lors de l'opération 34, alors il incrémente un compteur d'erreur. Si ce compteur d'erreur dépasse un seuil $S_1$ prédéterminé, alors le processeur 12 procède à une étape 54 d'application de contre-mesure. Par exemple une contre-mesure peut consister à bloquer le processeur 12 de manière à le rendre inutilisable même pour vérifier l'authenticité de données correctement authentifiées. Une autre contre-mesure possible est la commande de l'affichage d'un message d'avertissement.

L'incrémentation du compteur d'erreur peut avoir plusieurs causes. Par exemple, si le processeur 12 est soumis à une attaque par injection de fautes, cela peut se traduire par une exécution erronée de l'une des opérations 46 à 50 et donc par la restitution, à l'issue de l'étape 44 d'une donnée D' invalide. Une donnée D' invalide est également obtenue si le triplet (D, D*, $D_c$) reçu n'était pas authentique c'est-à-dire que la signature $D_c$ ne correspond pas à la donnée D.

Dans le cas où la valeur du compteur d'erreur est inférieure au seuil $S_1$, le module 20 procède à l'exécution du traitement spécifique sur la donnée D' lors d'une étape 56. Typiquement, le traitement spécifique comporte une opération 58 de vérification du format interne de la donnée D'. Si ce format est incorrect car, par exemple, le format de la donnée D reçue par l'unité 6 était incorrect, alors le traitement spécifique est arrêté et une opération corrective 60 est exécutée. L'opération 60 peut consister, par exemple, à demander la réémission de la donnée D à partir du serveur 4 dans un format correct.

Dans le cas contraire, c'est-à-dire si le format de la donnée D' est correct, l'exécution du traitement spécifique se poursuit jusqu'au bout.

On remarquera qu'il est possible d'exécuter une attaque par injection de fautes au niveau de l'opération 52 de manière à ce que même si la donnée D' est invalide le traitement spécifique soit exécuté lors de l'étape 56. Toutefois, une telle attaque est vaine puisque lors de l'étape 56, le traitement spécifique sera alors exécuté sur une donnée D' invalide. Or l'exécution du traitement spécifique sur la donnée D' invalide ne peut donner que des résultats inexploitables ou inutiles. Ainsi, une telle attaque ne remet pas en question la sécurité du système 2.

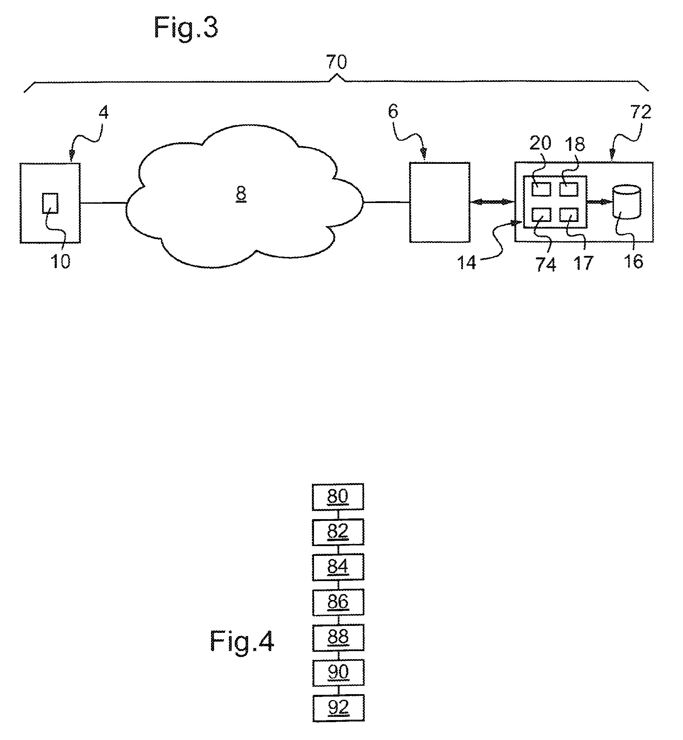

La figure 3 représente un autre système 70 sécurisé contre les attaques d'un branchement conditionnel par injection de fautes. L'architecture de ce système 70 est identique à l'architecture du système 2 à l'exception que le processeur 12 est remplacé par un processeur de sécurité 72. Ce processeur de sécurité 72 est identique au processeur 12 sauf qu'il comporte en plus un module 74 de chiffrement.

Dans le système 70, même l'opération 36 de chiffrement peut être réalisée dans le processeur 72. Ainsi, le serveur 4 n'a plus besoin de transmettre le cryptogramme D* au processeur 72. En effet, celui-ci peut facilement le reconstruire à partir de la donnée D reçue et de la fonction H. Ceci permet donc d'économiser de la bande passante sur le réseau 8. Dans ce mode de réalisation, l'ensemble des moyens de calcul de la donnée D' sont logés dans le processeur de sécurité.

De plus, étant donné que le cryptogramme D* est construit à l'intérieur du processeur 72, et non pas reçu par l'intermédiaire d'un réseau non sécurisé, il est possible de construire ce cryptogramme D* non pas en utilisant un algorithme de chiffrement complexe mais au contraire, un algorithme de chiffrement simple. Ceci permet d'exécuter le branchement conditionnel plus rapidement ou en consommant moins de ressources informatiques.

Un exemple d'un tel procédé de sécurisation d'un branchement conditionnel plus rapide à s'exécuter est décrit en regard de la figure 4.

Initialement, le processeur 72 tire, lors d'une opération 80, un nombre aléatoire $R_1$. Lors de cette opération 80, ce nombre $R_1$ est combiné par une opération d'addition avec l'octet 0x01.

Lors d'une opération 82, un second nombre aléatoire $R_2$ est tiré puis combiné avec l'octet 0x01.

Le reste du procédé de la figure 4 est décrit dans le cas particulier où le branchement conditionnel à sécuriser est le suivant :

« si A = B alors exécuter le traitement spécifique sur la donnée D »

Ensuite, on procède à une opération 84 de combinaison des opérandes A et B de l'expression booléenne du branchement conditionnel à l'aide d'une fonction F retournant une valeur X si A = B et une valeur autre si A est différent de B. Par exemple, les opérandes A et B sont combinés à l'aide de la fonction F suivante :

$$F(A, B) = A - B.$$

Avec cette fonction F, la valeur X est nulle tandis que les valeurs autres sont différentes de zéro. Cette fonction F ne retourne pas un résultat booléen. Ainsi, plusieurs bits doivent être prévus pour stocker le résultat R.

Lors d'une opération 86, le résultat R de la fonction F(A, B) est masqué en le combinant avec le nombre aléatoire $R_1$. Par exemple l'opération de masquage 86 est réalisée à l'aide de la relation suivante :

$$Y_1 = F(A, B)^* R_1.$$

Ensuite, lors d'une opération 88, la donnée D est chiffrée pour obtenir le cryptogramme D*. Ici le chiffrement appliqué est un chiffrement simple. Par exemple, il s'agit simplement d'un masquage de la donnée D à l'aide du nombre aléatoire $R_2$. Par exemple, ce masquage est réalisé à l'aide de la relation suivante :

$$D^* = R_2 \oplus D$$

Un tel chiffrement simple est aussi une fonction inversible qui permet de transformer la donnée D en une donnée différente D*.

Une fois la donnée D chiffrée, on procède à une opération 90 de déchiffrement du cryptogramme D* en faisant intervenir le résultat R de la fonction F(A, B) obtenu lors de l'opération 84. Cette opération de déchiffrement est une opération de construction de la donnée D'. Par exemple, lors de l'opération 90, les instructions suivantes sont successivement exécutées :

$$Y_1 = D^* + Y_1$$

$$D' = Y_1 \oplus R_2.$$

On comprend que si les opérandes A et B sont égaux, alors la donnée D' obtenue à l'issue de l'opération 90 est identique à la donnée D. Par contre, si les opérandes A et B sont différents, la donnée D'obtenue à l'issue de l'opération 90 est différente de la donnée D.

Ensuite, on procède systématiquement à une opération 92 lors de laquelle le module 20 exécute systématiquement le traitement spécifique sur la donnée D' que celle-ci soit identique à la donnée D ou pas.

En effet, il n'est pas nécessaire de détecter que la donnée D' est invalide. Par exemple, si le processeur 72 est utilisé pour autoriser le désembrouillage d'un programme multimédia, le fait de fournir une donnée D' invalide à un décodeur se traduira par un désembrouillage incorrect du programme multimédia et donc par l'affichage sur un écran d'un programme multimédia inintelligible pour le spectateur. Dans ces circonstances, il n'est pas nécessaire de détecter que la donnée D'est invalide.

Le procédé de la figure 4 illustre également un cas où les opérandes de l'expression booléenne sont construits de façon indépendante de la donnée D.

De nombreux autres modes de réalisation sont possibles. Par exemple, la clé $K_1$ peut être construite différemment de ce qui a été décrit ou peut même être une constante.

Les fonctions G, H, H' et les algorithmes ES et EA peuvent être publics ou secrets.

Dans le cas où la fonction G est secrète, la fonction F(D, Dc) peut être choisie comme suit :

$$F(D, D_C) = H(D) \oplus H'(D_C) \oplus G(H(D)).$$

La fonction F n'est pas nécessairement une combinaison d'opérations booléennes. Par exemple F peut être un polynôme.

Les fonctions F décrites ci-dessus, l'ont été dans le cas particulier où l'expression booléenne à tester pour le branchement conditionnel est une égalité. Toutefois, ce qui est décrit ici s'applique également à d'autres expressions booléennes. En particulier, l'expression booléenne testée peut être une inégalité entre deux opérandes A et B. Par exemple, l'expression booléenne testée peut être la suivante : A<B. Dans ce dernier cas, la sécurisation du branchement conditionnel « si A<B alors traiter D » nécessite de trouver une fonction F(A, B) qui retourne la clé $K_1$ si l'opérande A est strictement inférieur à l'opérande B et, sinon, une valeur différente. Un exemple d'une telle fonction F(A, B) est donné par la suite d'instructions suivante :

$$Y1 = A\text{-}B;$$

$$\text{If } (Y1 \neq 0) \text{ Then } R = 1 + Y1 / [(ABS (A\text{-}B)]$$

où ABS est la fonction mathématique correspondant à la valeur absolue.

On comprend que si A est strictement inférieur à B, alors la différence A-B est négative et le rapport Y1 / [(ABS (A-B)] est donc égal à « -1 » de sorte que le résultat R renvoyé par cette fonction est nul si A < B. Dans le cas contraire, le résultat R renvoyé par la fonction F est non nul. En utilisant une telle fonction F à la place de la fonction F du procédé de la figure 4 on peut exécuter le branchement conditionnel « Si A<B alors traiter D » de façon sécurisée. Le branchement conditionnel mis en oeuvre dans cet exemple de fonction F(A, B) n'est pas un branchement conditionnel sensible dans le sens où, si on l'attaque en injectant des fautes, le résultat de la fonction F sera incorrect de sorte que la donnée D' utilisée pour le traitement spécifique sera invalide. Ce branchement n'introduit donc pas de faiblesse dans l'algorithme de sécurité.

Lorsque l'expression booléenne à tester est une différence entre deux opérandes A et B, cela revient à tester successivement deux inégalités. Par exemple, le branchement conditionnel « si A≠B alors traiter D » peut également s'écrire sous la forme suivante :
«
si A<B alors traiter D ;
si A>B alors traiter D ;
»

Chacun de ces deux branchements conditionnels peut être sécurisé comme indiqué ci-dessus.

De préférence, les opérandes de l'expression booléenne du branchement conditionnel sont des opérandes non-booléennes.

En variante, les opérations de formatage de la donnée D et de vérification de la syntaxe de la donnée D' peuvent être omises.

En variante, les opérations de transformation de la donnée D en une donnée différente D* peuvent aussi être omises. Dans ce cas, la donnée D' est calculée à l'aide d'une formule combinant directement les opérandes de l'expression booléenne à la donnée D. Par exemple, la formule suivante peut être utilisée à cet effet :

$$D' = A\text{-}B + D$$

où A et B sont les opérandes de l'expression booléenne « A=B ».

Ce qui a été décrit ci-dessus dans le cas de la sécurisation d'un seul branchement conditionnel peut s'appliquer à une instruction du type « switch ». Plus précisément, une telle instruction « switch » se décompose en une succession de branchements conditionnels auxquels le procédé décrit ici s'applique. Ce qui a été décrit ici s'applique également à tout branchement conditionnel, qu'il soit à exécuter dans une routine de sécurité ou à la sortie d'une telle routine.

Le procédé de sécurisation décrit ici peut aussi être utilisé si l'expression booléenne implique plusieurs valeurs. Par exemple, l'expression booléenne peut être la suivante A + B = C. Dans ce cas, la fonction F est une fonction des trois valeurs A, B et C et retourne le résultat R. Par exemple, la fonction F(A, B, C) peut être la suivante :

$$F(A, B, C) = (H(A + B) \oplus H(C)) \oplus G(H(D))$$

où :

- H est la fonction de hachage, et

- G(H(D)) est la clé $K_1$.

Au moins l'un des opérandes de l'expression booléenne est une variable dont la valeur est inconnue à l'avance. Par contre, un ou plusieurs des autres opérandes peuvent être des constantes. Ainsi, le cas où l'expression booléenne ne comporte qu'un seul opérande A dont la valeur peut être « vrai » ou « faux », n'est en fait qu'une forme particulière du cas où l'expression booléenne consiste à tester l'égalité de cet opérande A avec la valeur « 1 » (« vrai ») ou « 0» (« faux »). Donc, ce cas n'est qu'une forme particulière d'une expression booléenne avec un opérande A qui est une variable et un opérande B qui est une constante.

Pour des données D de petite taille, le cryptogramme D* peut aussi être obtenu en chiffrant la donnée D avec une clé privée et un algorithme de chiffrement asymétrique. Dans ce cas, l'unité 6 ou le processeur 12 ou 72 doit disposer de la clé publique correspondante pour déchiffrer le cryptogramme D*. Dans ce contexte, un branchement conditionnel peut être exécuté de façon sure en chiffrant la clé publique avec la clé $K_1$ et en soumettant la restitution de la clé publique d'origine à la délivrance par la fonction F d'un résultat R identique à la clé $K_1$. En d'autres termes, on applique à la clé publique le même traitement que celui appliqué à la donnée D dans les procédés des figures 2 et 4.

Le module 20 peut être implémenté dans l'unité 6.

L'algorithme de chiffrement asymétrique EA peut être choisi de telle sorte qu'il soit aussi son propre algorithme de déchiffrement associé $EA^{-1}$.

## Revendications

1. Procédé de sécurisation d'un branchement conditionnel contre des attaques par injection de fautes, ce branchement conditionnel autorisant l'exécution d'un traitement spécifique sur une donnée D si une expression booléenne entre un ou plusieurs opérandes est vérifiée et, sinon, interdisant l'exécution de ce traitement spécifique sur la donnée D, ce procédé comportant l'exécution du branchement conditionnel à l'aide de la succession suivante d'opérations :

   a) le calcul (36, 48, 50 ; 84, 88, 90) à l'aide d'un processeur de sécurité d'une donnée D' à partir de la donnée D et des opérandes de l'expression booléenne de manière à ce que la donnée D' soit identique à la donnée D si et seulement si l'expression booléenne est vérifiée et que la donnée D' ait une valeur autre, dite invalide, si l'expression booléenne n'est pas vérifiée, la donnée D' étant codée sur plusieurs bits, et
   b) l'utilisation (56 ; 92) de la donnée D' en lieu et place de la donnée D lors de toute exécution du traitement spécifique, **caractérisé en ce que** le calcul de la donnée D' comprend :
   c) la transformation (36 ; 88), à l'aide d'une fonction inversible, de la donnée D pour produire une donnée différente D* à partir de laquelle il n'est pas possible de reconstruire la donnée D sans aucune autre information,
   d) la construction (50 ; 90) de la donnée D' à partir de la donnée D* et des opérandes utilisés pour évaluer l'expression booléenne de manière à ce que la donnée D' soit identique à la donnée D si et seulement si l'expression booléenne est vérifiée et, que la donnée D' ait une valeur autre, dite invalide, si l'expression booléenne n'est pas vérifiée.

2. Procédé selon la revendication 1, dans lequel :

   - le procédé comprend la combinaison (48) des opérandes utilisés pour évaluer l'expression booléenne de manière à obtenir un résultat R non booléen ayant une valeur X si et seulement si l'expression booléenne est vérifiée, le résultat R étant codé sur plusieurs bits,
   - l'opération c) est une opération de chiffrement (36) de la donnée D en utilisant un algorithme de chiffrement et la valeur X comme clé de chiffrement pour obtenir la donnée D*, et
   - lors de l'opération d), la donnée D* est déchiffrée (50) en utilisant un algorithme de déchiffrement et le résultat R comme clé de déchiffrement pour construire la donnée D'.

3. Procédé selon la revendication 2, dans lequel la valeur X est fonction de la donnée D.

4. Procédé selon la revendication 1, dans lequel l'opération c) est une opération de masquage (88) de la donnée D à l'aide d'un nombre aléatoire.

5. Procédé selon l'une quelconque des revendications précédentes, dans lequel le procédé comprend :

   - avant le calcul de la donnée D', l'adjonction (34) à la donnée D de bits supplémentaires selon une syntaxe connue pour obtenir une donnée D avec une syntaxe identifiable,

- le calcul de la donnée D' à partir de la donnée D avec une syntaxe identifiable,
- avant l'exécution du traitement spécifique ou pendant son exécution, la vérification (52) de la syntaxe de la donnée D' pour détecter la mise en oeuvre d'une attaque par injection de fautes.

**6.** Procédé selon l'une quelconque des revendications précédentes, dans lequel l'expression booléenne est une expression d'égalité entre plusieurs opérandes.

**7.** Support d'enregistrement d'informations, **caractérisé en ce que** ce support comporte des instructions pour l'exécution des opérations a), b) et d) d'un procédé de sécurisation conforme à l'une quelconque des revendications précédentes, lorsque ces instructions sont exécutées par un calculateur électronique.

**8.** Programme d'ordinateur, **caractérisé en ce que** ce programme comporte des instructions pour l'exécution des opérations a), b) et d) d'un procédé de sécurisation conforme à l'une quelconque des revendications 1 à 6, lorsque ces instructions sont exécutées par un calculateur électronique.

**9.** Système sécurisé contre des attaques d'un branchement conditionnel par injection de fautes, ce branchement conditionnel autorisant l'exécution d'un traitement spécifique sur une donnée D si une expression booléenne entre une ou plusieurs opérandes est vérifiée et, sinon, interdisant ce traitement spécifique sur la donnée D, ce système comprenant :

- des moyens de calcul à l'aide d'un processeur de sécurité d'une donnée D' à partir de la donnée D et des opérandes de l'expression booléenne de manière à ce que la donnée D' soit identique à la donnée D si et seulement si l'expression booléenne est vérifiée et, que la donnée D' ait une valeur autre, dite invalide, si l'expression booléenne n'est pas vérifiée, la donnée D' étant codée sur plusieurs bits, et:
- un module (20) apte à exécuter le traitement spécifique sur la donnée D' en lieu et place de la donnée D à chaque fois que le traitement spécifique doit être exécuté,

**caractérisé en ce que** :

- le système comprend un module (10) de chiffrement apte à transformer, à l'aide d'une fonction inversible, la donnée D pour produire une donnée différente D* à partir de laquelle il n'est pas possible de reconstruire la donnée D sans aucune autre information,
- les moyens de calcul sont aptes à construire la donnée D' à partir de la donnée D* et des opérandes utilisés pour évaluer l'expression booléenne de manière à ce que la donnée D' soit identique à la donnée D si et seulement si l'expression booléenne est vérifiée et, que la donnée D' ait une valeur autre, dite invalide, si l'expression booléenne n'est pas vérifiée.

**10.** Système selon la revendication 9, dans lequel le processeur de sécurité est apte à exécuter au moins une opération de calcul de la donnée D'.

**Claims**

**1.** Method for securing a conditional branching against fault-injection attacks, this conditional branching permitting the execution of a specific processing operation on a piece of data D if a Boolean expression between one or more operands is verified and, if not, prohibiting the execution of this specific processing operation on the piece of data D, this method comprising the execution of the conditional branching by means of the following succession of operations:

a) the computing (36, 48, 50; 84, 88, 90), by means of a security processor, of a piece of data D' from the piece of data D and the operands of the Boolean expression so that the piece of data D' is identical to the piece of data D if and only if the Boolean expression is verified and so that the piece of data D' has another value, called an invalid value, if the Boolean expression is not verified, the data D' being encoded on several bits, and

b) the use (56; 52) of the piece of data D' in place of the piece of data D during any execution of the specific processing operation,

**characterized in that** the computing of the piece of data D' comprises:

c) the conversion (36; 88), by means of an invertible function, of the piece of data D to produce a different piece of data D* from which it is not possible to rebuild the piece of data D without any other piece of information,

d) the building (50; 90) of the piece of data D' from the piece of data D* and from the operands used to evaluate the Boolean expression so that the piece of data D' is identical to the piece of data D if and only if the Boolean expression is verified and so that the piece of data D' has another value, called an invalid value, if the Boolean expression is not verified.

2. Method according to claim 1, wherein:

- the method comprises the combining (48) of the operands used to evaluate the Boolean expression so as to obtain a non-Boolean result R having a value X if and only if the Boolean expression is verified, the result R being encoded on several bits,
- the operation c) is an operation of encryption (36) of the piece of data D by using an encryption algorithm and the value X as an encryption key to obtain the piece of data D*, and
- during the operation d), the piece of data D* is decrypted (50) by using a decryption algorithm and the result R as a decryption key to build the piece of data D'.

3. Method according to claim 2, wherein the value X is a function of the piece of data D.

4. Method according to claim 1, wherein the operation c) is an operation for masking (88) the piece of data D by means of a random number.

5. Method according to any one of the above claims, wherein the method comprises:

- before the computing of the piece of data D', the adjoining (34) to the piece of data D of additional bits according to a known syntax to obtain a piece of data D with an identifiable syntax,
- the computing of the piece of data D' from the piece of data D with an identifiable syntax,
- before the execution of the specific processing operation or during its execution, the verifying (52) of the syntax of the piece of data D' to detect the implementation of a fault-injection attack.

6. Method according to any one of the above claims, wherein the Boolean expression is an expression of equality among several operands.

7. Information-recording medium, **characterized in that** this medium 10 comprises instructions for the execution of the operations a), b) and d) of a method for securing according to any one of the above claims, when these instructions are executed by an electronic computer.

8. Computer program **characterized in that** this program comprises instructions to execute the operations a), b) and d) of a method for securing according to any one of the claims 1 to 6, when these instructions are executed by an electronic computer.

9. System secured against fault-injection attacks on a conditional branching, this conditional branching permitting the execution of a specific operation on a piece of data D if a Boolean expression between one or more operands is verified and if not, prohibiting this specific operation on the piece of data D.
this system comprising:

- means for the computing, by means of a security processor, of a piece of data D' from the piece of data D and from the operands of the Boolean expression so that the piece of data D' is identical to the piece of data D if and only if the Boolean expression is verified and so that the piece of data D' has another value, called an invalid value, if the Boolean expression is not verified, the piece of data D' being encoded on several bits, and:
- a module (20) capable of executing the specific processing operation on the piece of data D' in place of the piece of data D whenever the specific processing operation has to be executed, **characterized in that**:
- the system comprises an encryption module (10) capable of converting, by means of an invertible function, the piece of data D to produce a different piece of data D* from which it is not possible to rebuild the piece of data D without any other piece of information,
- the means for computing are capable of building the piece of data D' from the piece of data D* and from the operands used to evaluate the Boolean expression so that this piece of data D' is identical to the piece of data D if and only if the Boolean expression is verified and so that the piece of data D' has another value, called an invalid value, if the Boolean expression is not verified.

10. System according to claim 9, wherein the security processor is capable of executing at least one operation for computing the piece of data D'.

**Patentansprüche**

1. Sicherungsverfahren eines bedingten Anschlusses vor Angriffen per Eingabe von Fehlern, wobei dieser bedingte Anschluss die Ausführung einer spezifischen Verarbeitung an einer Größe D zulässt, wenn ein boolescher Ausdruck zwischen einem oder mehreren Operanden überprüft ist und andernfalls die Ausführung dieser spezifischen Verarbeitung an der Größe D untersagt, wobei dieses Verfahren die Ausführung des bedingten Anschlusses anhand der nachstehenden Folge von Operationen umfasst.

   a) die Berechnung (36, 48, 50; 84, 88, 90) anhand eines Sicherheitsprozessors einer Größe D' ausgehend von einer Größe D und Operanden des booleschen Ausdrucks derart, dass die Größe D' identisch mit der Größe D ist, wenn und nur wenn der boolesche Ausdruck überprüft ist und wenn die Größe D' einen anderen, so genannten ungültigen Wert hat, wenn der boolesche Ausdruck nicht überprüft ist, wobei die Größe D' über mehrere Bits kodiert ist, und
   b) die Verwendung (56; 92) der Größe D' anstelle der Größe D bei jeder Ausführung der spezifischen Verarbeitung, **dadurch gekennzeichnet, dass** die Berechnung der Größe D' umfasst:
   c) die Umwandlung (36; 88) der Größe D anhand einer umkehrbaren Funktion, um eine unterschiedliche Größe D* zu produzieren, von der ausgehend es nicht möglich ist, die Größe D ohne sonstige Informationen wieder aufzubauen,
   d) der Aufbau (50; 84, 90) der Größe D' ausgehend von einer Größe D* zur Bewertung des booleschen Ausdrucks derart, dass die Größe D' identisch mit der Größe D ist, wenn und nur wenn der boolesche Ausdruck überprüft ist und wenn die Größe D' einen anderen, so genannten ungültigen Wert hat, wenn der boolesche Ausdruck nicht überprüft ist.

2. Verfahren gemäß Anspruch 1, in dem

   - das Verfahren die Kombination (48) der Operanden umfasst, die zur Bewertung des booleschen Ausdrucks derart verwendet werden, dass ein nicht boolesches Ergebnis R mit einem Wert X erhalten wird, wenn und nur wenn der boolesche Ausdruck überprüft wird, wobei das Ergebnis R über mehrere Bits kodiert ist,
   - die Operation c) ist eine Chiffrierungsoperation (36) der Größe D unter Heranziehung eines Chiffrierungsalgorithmus und des Wertes X als Chiffrierungsschlüssel zwecks Erhalts der Größe D*, und
   - bei der Operation d) wird die Größe D* dechiffriert (50), indem ein Dechiffrierungsalgorithmus und das Ergebnis R als Chiffrierungsschlüssel für den Aufbau der Größe D' verwendet werden.

3. Verfahren gemäß Anspruch 2, in dem der Wert X von der Größe D abhängt.

4. Verfahren gemäß Anspruch 1, in dem die Operation c) eine Maskierungsoperation (88) der Größe D anhand einer zufälligen Zahl ist.

5. Verfahren gemäß einem der vorhergehenden Ansprüche, in dem das Verfahren umfasst:

   - vor der Berechnung der Größe D' das Hinzufügen (34) von zusätzlichen Bits zur Größe D gemäß einer bekannten Syntax, um eine Größe D mit einer identifizierbaren Syntax zu erhalten,
   - die Berechnung der Größe D' ausgehend von der Größe D mit einer identifizierbaren Syntax,
   - vor der Ausführung der spezifischen Verarbeitung oder während ihrer Ausführung die Überprüfung (52) der Syntax der Größe D' zur Feststellung der Umsetzung eines Angriffs per Eingabe von Fehlern.

6. Verfahren gemäß einem der vorhergehenden Ansprüche, in dem der boolesche Ausdruck ein Gleichheitsausdruck zwischen mehreren Operanden ist.

7. Speicherträger für Informationen, **dadurch gekennzeichnet, dass** dieser Träger Anweisungen für die Ausführung der Operationen a), b) und d) eines Sicherungsverfahrens gemäß einem der vorhergehenden Ansprüche umfasst, wenn diese Anweisungen von einem elektronischen Rechner ausgeführt werden.

8. Computerprogramm, **dadurch gekennzeichnet, dass** das Programm Anweisungen für die Ausführung der Operationen a), b) und d) eines Sicherungsverfahrens gemäß einem der Ansprüche 1 bis 6 umfasst, wenn diese Anweisungen von einem elektronischen Rechner ausgeführt werden.

9. Gegen Angriffe eines bedingten Anschlusses per Eingabe von Fehlern gesichertes System, wobei dieser bedingte Anschluss die Ausführung einer spezifischen Verarbeitung an einer Größe D zulässt, wenn ein boolescher Ausdruck zwischen einem oder mehreren Operanden überprüft ist und anderenfalls diese spezifische Verarbeitung auf der Größe D untersagt, wobei dieses System umfasst:

- Berechnungsmittel anhand eines Sicherheitsprozessors einer Größe D' ausgehend von einer Größe D und Operanden des booleschen Ausdrucks derart, dass die Größe D' identisch mit der Größe D ist, wenn und nur wenn der boolesche Ausdruck überprüft ist und wenn die Größe D' einen anderen, so genannten ungültigen Wert hat, wenn der boolesche Ausdruck nicht überprüft ist, wobei die Größe D' über mehrere Bits kodiert ist, und
- ein Modul (20), das geeignet ist, die spezifische Verarbeitung an der Größe D' anstelle der Größe D jedes Mal dann auszuführen, wenn die spezifische Verarbeitung ausgeführt werden muss, **dadurch gekennzeichnet, dass**:
- das System ein Chiffrierungsmodul (10) umfasst, das zur Umwandlung der Größe D anhand einer umkehrbaren Funktion geeignet ist, um eine unterschiedliche Größe D* zu produzieren, von der ausgehend es nicht möglich ist, die Größe D ohne sonstige Informationen wieder aufzubauen,
- die Berechnungsmittel zum Aufbau der Größe D' ausgehend von einer Größe D* und der Operanden geeignet sind, die zur Bewertung des booleschen Ausdrucks derart geeignet sind, dass die Größe D' identisch mit der Größe D ist, wenn und nur wenn der boolesche Ausdruck überprüft ist und wenn die Größe D' einen anderen, so genannten ungültigen Wert hat, wenn der boolesche Ausdruck nicht überprüft ist.

10. System gemäß Anspruch 9, in dem der Sicherheitsprozessor geeignet ist, wenigstens eine Berechnungsoperation der Größe D' auszuführen.

# Fig.1

# Fig.2

## Fig.3

## Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2007006887 A

**Littérature non-brevet citée dans la description**

• **LAN LOGAN ; FRANK O'HARA.** The complete Timex TS1000/Sinclair ZX81 ROM disassembly. Leighton Buzzard Melbourne House, 1982